Europäisches Patentamt

European Patent Office

Office européen des brevets

(19)

(11) Numéro de publication : **0 052 051**
**B1**

(12) **FASCICULE DE BREVET EUROPÉEN**

(45) Date de publication du fascicule du brevet :
01.10.86

(51) Int. Cl.⁴ : **G 09 B   9/06**

(21) Numéro de dépôt : 81401740.6

(22) Date de dépôt : 29.10.81

(54) Simulateur pour planche à voile.

(30) Priorité : 12.11.80 FR 8024009

(43) Date de publication de la demande :
19.05.82 Bulletin 82/20

(45) Mention de la délivrance du brevet :
01.10.86 Bulletin 86/40

(84) Etats contractants désignés :
DE GB IT NL SE

(56) Documents cités :
DE-A- 2 541 106
DE-A- 2 941 839
DE-U- 7 610 183
FR-A- 2 365 356
US-A- 4 021 934

(73) Titulaire : **Berger, Pierre**
**La Mole**
**F-83310 Cogolin (FR)**

(72) Inventeur : **Berger, Pierre**
**La Mole**
**F-83310 Cogolin (FR)**

EP 0 052 051 B1

Jouve, 18, rue St-Denis, 75001 Paris, France

### Description

La présente invention concerne les simulateurs pour planche à voile, et notamment les appareils destinés à apprendre le maniement d'une planche à voile aux débutants.

Il existe déjà quelques dispositifs qui permettent d'apprendre le maniement des planches à voile, comme notamment celui qui est décrit dans le Brevet U.S.A. 4 021 934. Ces dispositifs connus ne sont pas du tout adaptés car ils sont généralement réalisés de façon très artisanale, et surtout, ne répondent pas à toutes les conditions nécessaires pour vraiment apprendre l'utilisation d'une planche à voile à des débutants. En effet, le sport de la planche à voile commence à prendre un essor très important et à drainer vers lui un nombre de pratiquants très important.

Il était donc nécessaire, notamment pour les écoles d'apprentissage de planche à voile, de mettre au point un dispositif qui permette à sec de pratiquer l'écolage de la planche à voile, et que ce dispositif respecte au maximum l'ensemble des mouvements possibles d'une planche à voile lorsqu'elle est dans son élément naturel, c'est-à-dire l'eau, et qu'elle est soumise au gré du vent.

Aussi, la présente invention a-t-elle pour but de réaliser un simulateur pour planche à voile qui facilite et améliore l'initiation, le perfectionnement de la technique, et l'entraînement sur terre, de la manipulation d'une planche à voile dans des conditions comparables à celles que l'on retrouve sur la mer.

Plus précisément, la présente invention a pour objet un simulateur pour planche à voile comprenant une infrastructure d'appui au sol, un support d'une planche à voile, des moyens pour faire pivoter ledit support par rapport à ladite structure, des moyens de freinage de la rotation dudit support, caractérisé par le fait que ledit support comporte un bras monté pivotant autour d'un axe sur ladite structure, un berceau et des moyens élastiques déformables disposés entre ledit bras pivotant et ledit berceau, cesdits moyens élastiques étant fixés respectivement à ces deux dits bras pivotant et berceau.

Selon une autre caractéristique, ladite infrastructure est constituée par un socle réalisé en un ou plusieurs éléments avantageusement palmés.

Selon une autre caractéristique, ledit socle est réalisé par l'assemblage d'éléments identiques.

Selon une autre caractéristique, lesdits éléments identiques dudit socle sont rassemblés au moyen d'une bague de rappel de centrage coopérant avec chacun des éléments.

Selon une autre caractéristique, les moyens de freinage sont constitués par un organe de friction lié avec ledit support, et apte à coopérer avec ladite structure sur lequel est entraîné en rotation ledit support.

Selon une autre caractéristique de l'invention, ledit berceau comporte une partie centrale sensiblement en forme de U à ailes s'écartant l'une de l'autre, cedit profilé étant positionné de façon que les ailes soient tournées vers ledit bras pivotant.

Selon une autre caractéristique de l'invention, ledit simulateur comporte des moyens de commande d'un système d'alarme apte à être déclenché par une oscillation critique dudit berceau.

D'autres caractéristiques et avantages de la présente invention apparaîtront au cours de la description suivante, donnée en regard des dessins annexés, à titre illustratif mais nullement limitatif, dans lesquels :

les figures 1 à 13 représentent un mode de réalisation avantageux d'un simulateur selon l'invention, et,

les figures 14 et 15, un mode avantageux de réalisation d'une voile permettant d'être utilisée avec des planches positionnées sur un tel simulateur. L'ensemble des figures 1 à 13 représentant le même mode de réalisation mais, soit en totalité ou soit en partie, afin de bien faire comprendre la structure et le fonctionnement d'un tel simulateur, il est bien évident que les mêmes références désignent les mêmes éléments.

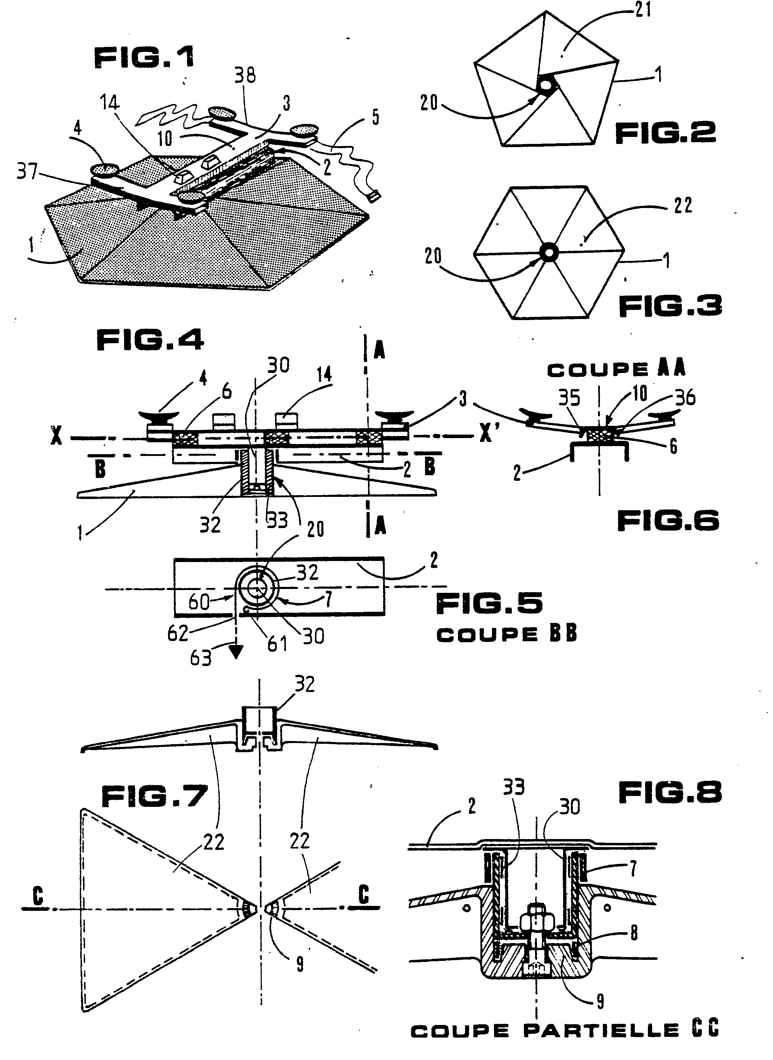

Plus précisément, la figure 1 représente, vu en perspective, un mode de réalisation avantageux d'un simulateur qui comprend essentiellement un socle 1 sur lequel est monté rotatif un bras pivot 2 sur lequel est disposé, au moyen de supports élastiques déformables qui seront décrits ci-après, un berceau 3 comprenant un profilé 10 supportant deux bras à l'extrémité desquels sont disposées quatre ventouses 4 qui permettent de centrer et supporter une planche à voile.

Avantageusement même, ces bras supporteront des sangles 5 permettant de bien solidariser une planche à voile avec le berceau 3.

Les figures 2 et 3 représentent essentiellement le socle 1 dans deux modes de réalisation avantageux en vue de dessus, la figure 2 représentant un socle constitué d'une pluralité d'éléments palmés 21 qui se raccordent tangentiellement à l'axe de pivot ou fût 20.

Par contre, dans le mode de réalisation illustré sur la figure 3, la pluralité d'éléments 22 se raccorde radialement à ce même axe pivotant ou fût 20.

La figure 4 représente, avec les figures 5 et 6 respectivement trois coupes du simulateur selon la figure 1.

On voit avantageusement que sur le socle 1 est disposé monté rotatif un fût 20 qui est maintenu dans ce socle 1, notamment par enserrage lors du montage des différents éléments du socle, que ce soit des éléments en configuration tangentielle ou radiale 21, 22.

Avantageusement, ce fût 20 sera constitué par un axe rotatif 30 monté dans un palier 32 au moyen d'un roulement à billes schématiquement illustré en 33.

Sur cet axe 30, est monté un bras pivotant 2, celui-ci étant fixé solidairement à l'axe 30 par tout moyen et avantageusement boulonné.

Un mode de réalisation plus détaillé de la

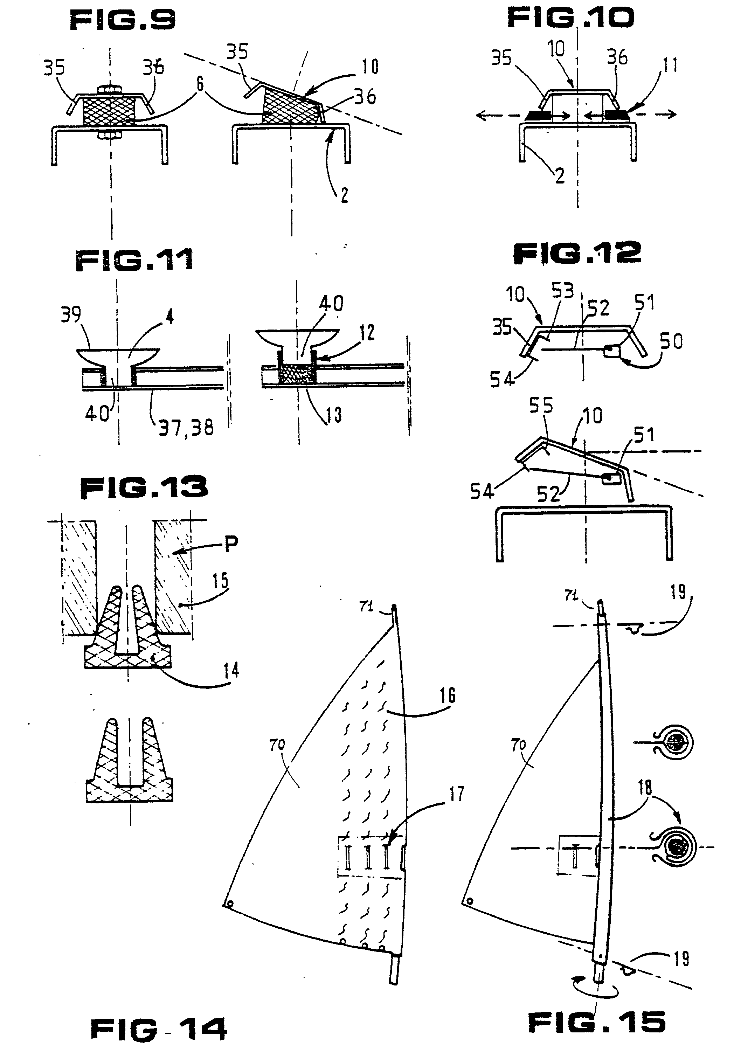

combinaison de cet axe 30 dans le palier 32 et des roulements 33 apparaît plus clairement sur les figures 7 et 8 où l'on voit les différents éléments constitutifs de ce fût 20, et notamment le palier 32 enserré lors du montage dans les différents éléments 22 du socle comme celui qui est réalisé sur la figure 3.

Ces différents éléments de socle seront maintenus par une bague de rappel 8 enserrant des ergots 9 de forme sensiblement conique, solidaires de chaque élément constitutif du socle 1.

Pour revenir plus spécifiquement aux figures 4, 5, 6, le simulateur comprend, en plus, des éléments élastiquement déformables 6 solidaires du bras pivotant 2 par tout moyen.

Avantageusement, ce bras pivotant de forme oblongue comprend trois éléments élastiquement déformables 6 répartis le long de celui-ci de façon qu'ils définissent une position beaucoup plus longue que large, l'ensemble de ces éléments élastiques définissant une direction longitudinale relativement longue par rapport à une direction transversale relativement courte qui, comme il sera explicité ci-après, par leur déformation, pourront reconstituer les deux éléments essentiels d'une planche à voile sur l'eau c'est-à-dire le tangage et le roulis.

Sur ces trois éléments élastiquement déformables, comme représentés sur la figure, est disposé un berceau 3 comportant essentiellement un profilé 10 sensiblement en forme de U dont les deux bords latéraux 35 et 36 sont tournés vers le bras pivotant 2. Et, de même, ce profilé 10 est fixé sur la face des éléments élastiques opposée à celle qui est fixée sur le bras pivotant 2 par tout moyen vissage, collage, etc., comme il est bien connu dans la technique des amortisseurs caoutchoutés.

Un mode de réalisation de l'assemblage du profilé 10 sur le bras pivotant 2, et des éléments élastiques déformables est plus spécialement représenté sur la figure 9 qui permet, en plus, de bien faire comprendre le mouvement relatif du profilé 10 par rapport au bras pivotant 2 lors notamment d'un mouvement de la planche correspondant au roulis.

On constate que les deux ailes latérales 35 et 36 du profilé 10 permettent, lors d'un roulis excessif, de venir en contact avec le bras pivotant 2 et de limiter ainsi cette oscillation dans un but de sécurité pour l'élève-pratiquant.

Bien entendu, sur ce profilé 10 constitutif du berceau 3, sont disposés deux bras latéraux 37 et 38 sensiblement perpendiculaires au profilé 10 à ses deux extrémités, et symétriques par rapport à celui-ci. Aux extrémités de ces bras sont disposées respectivement quatre ventouses 4 de préhension, sur lesquelles peuvent venir prendre appui les planches à voile qui seront disposées sur ce simulateur lorsque celui-ci sera utilisé dans le cas d'un écolage.

Un exemple de réalisation de ces ventouses est illustré sur la figure 11 où l'on voit que celles-ci sont réalisées par exemple en un matériau déformable, mais assez rigide, comportant une tête de préhension 39 sur laquelle est positionné un pied 40 pouvant coopérer avec des logements de fixation réalisés dans les bras 37, 38.

La position de ces ventouses 4 pourra être réglée en hauteur, notamment en intercalant, entre le pied 40 et les différents bras 37, 38, notamment un manchon 12 dans le fond duquel pourront être disposées des cales intercalaires 13.

De plus, le berceau 3 comporte des cales de centrage 14 par exemple deux, qui seront destinées à pénétrer dans le puits de dérive (15) qui se trouve généralement sur une planche à voile, représentée en P.

Celles-ci seront avantageusement amovibles pour le cas où une planche à voile n'aurait pas un puits de dérive conforme à la position respective ment des deux cales de centrage 14, comme apparaissant sur la figure 1, et représentées schématiquement sur la figure 13.

Avantageusement, un tel simulateur pourra comprendre comme représenté sur la figure 10, des taquets cales 11 qui pourront être interposés entre les ailes 35, 36 du profilé 10 et le bras pivotant 2 afin de supprimer par exemple l'oscillation correspondant au roulis et, de même, si ces taquets-cales sont disposés tout le long du bras pivot 2 et du profilé 10, la deuxième oscillation correspondant au tangage. Bien entendu, l'utilisation d'une planche à voile présente quelques difficultés, notamment pour les élèves, et ceux-ci peuvent, lors de mouvements inconsidérés, dépasser certaines limites permises qui entraîneraient une chute si la planche à voile était dans son élément naturel.

Afin de faciliter l'éveil de l'élève, le simulateur peut comprendre un système d'alarme 50 représenté schématiquement sur la figure 12, et qui peut être constitué très schématiquement d'un contacteur 51 dont le bras 52 peut coopérer avec deux butées fixes 53, 54 du profilé 10, et notamment de l'aile 35.

De ce fait, si les oscillations du profilé 10 sont trop importantes dans un sens ou dans l'autre, les deux butées 54 et 55 vont venir coopérer avec le bras 52 du contacteur 51 et déclencher une alarme qu'elle soit sonore ou visuelle.

Avantageusement, lorsqu'une planche à voile sera utilisée sur un tel simulateur, il pourra être utilisé une voilure 70 telle que celle qui est illustrée sur les figures 14 et 15, et qui représente un mode avantageux, notamment pour le réglage de la voilure et éventuellement le rangement de celle-ci.

Plus précisément, la réduction de voilure par bande de ris 16 ainsi que la fixation et le réglage du wishbone s'effectuent par un bout passant par une fente 17, la réduction de voilure s'effectuant essentiellement par enroulement autour du mât 71 et à l'intérieur du profilé fendu 18, clavetable 19, tel qu'il apparaît sur la figure 15.

Le simulateur tel qu'il est représenté sur les figures permet donc l'utilisation en vue de l'apprentissage de la planche à voile.

Comme il a été décrit précédemment, les moyens élastiques 6 permettent de réaliser deux mouvements essentiels d'une planche à voile sur l'eau, c'est-à-dire le tangage et le roulis. En plus, le simulateur permet l'obtention d'une direction voulue de la planche à voile.

Cette direction est obtenue sur le simulateur par le pivotement du bras pivot 2 solidaire de l'axe 30 par rapport au socle 1 au moyen d'un palier 32 et des roulements à billes 33.

Cependant, il est bien évident que la rotation de ce bras pivot ne doit pas être plus libre que nécessaire et peut même être, dans certains cas, complètement annihilée.

Pour cela, le simulateur comprend, comme apparaissant sur la figure 5, un système de freinage 60 constitué par une garniture de frein telle qu'un feuillard 7 dont une extrémité est fixée en 61 sur un côté du bras pivot 2. L'autre extrémité de ce feuillard 7, après avoir entouré le fût 20, et plus particulièrement le palier 32 qui est fixe par rapport au socle 1, est fixée à des moyens de tension représentés schématiquement en 63 ; ce qui, en exerçant une traction sur l'extrémité 62 tend plus ou moins le feuillard de garniture qui, de ce fait, va exercer une friction plus ou moins grande sur le palier 32 du fût 20. Avec une traction plus importante, le bras pivot peut être fixé par rapport au socle 1 si cela était nécessaire pour l'apprentissage.

Le simulateur qui vient d'être décrit ci-dessus fonctionne essentiellement de la façon suivante, lorsqu'il est utilisé pour l'apprentissage.

On utilise une planche à voile connue et classique, on la positionne sur le berceau 3 de façon que son puits de dérive vienne épouser les deux cales de centrage 14 et que son dessous se positionne et se centre sur les quatre ventouses 4.

Une fois que cette planche est positionnée, elle est solidarisée ou berceau par un sanglage, par exemple au moyen des sangles 5.

La voile avec son mât sont positionnés de façon classique avec son wishbone sur la planche à voile et le tout est positionné sur un sol relativement rigide qui peut même être du sable du fait de la forme suffisamment large du socle 1.

Ainsi préparé, l'élève peut monter sur sa planche à voile et s'exercer à la manipulation de celle-ci en fonction du vent qui souffle et qui peut orienter cette planche comme s'il naviguait sur de l'élément liquide.

On voit donc que suivant les différentes manipulations et les différentes orientations du vent, la planche peut subir toute une sorte de mouvements qui se décomposent essentiellement en un mouvement de tangage si l'oscillation a lieu autour d'un axe perpendiculaire à l'alignement des trois éléments élastiques 6, un mouvement de roulis si l'oscillation a lieu autour de l'axe longitudinal défini par ces trois éléments élastiques et enfin, un mouvement de pivotement par une rotation autour du palier 32, au moyen de l'axe 30 et des roulements à bille 33. Ce dernier mouvement de rotation peut d'ailleurs être freiné au moyen de la garniture de frein qui sera plus ou moins tendue par action sur le tendeur 63.

Bien entendu, les sécurités, notamment d'amplitude d'oscillation correspondant au roulis seront limitées par les ailes 35 et 36 et, en toute évidence, si le simulateur comprend un système d'alarme, celui-ci pourra fonctionner, notamment dans ce cas d'amplitude trop grande.

Enfin, de façon très schématique, si un vent trop violent se produisait, la voilure serait réduite par enroulement autour de l'axe.

L'exemple de simulateur qui a été décrit ci-dessus correspond à l'invention, mais il est bien évident que l'homme de l'art pourra changer les moyens décrits par des moyens équivalents sans que pour cela il sorte du cadre de l'invention.

**Revendications**

1. Simulateur pour planche à voile comprenant une infrastructure d'appui au sol (1), un support d'une planche à voile, des moyens pour faire pivoter ledit support par rapport à ladite structure, des moyens de freinage de la rotation dudit support, caractérisé par le fait que ledit support comporte un bras (2) monté pivotant autour d'un axe (30) sur ladite structure (1), un berceau (3) et des moyens élastiques déformables disposés entre ledit bras pivotant et ledit berceau, cesdits moyens élastiques (6) étant fixés respectivement à ces deux dits bras pivotant (2) et berceau (3).

2. Simulateur selon la revendication 1, caractérisé par le fait que ladite infrastructure est constituée par un socle (1) réalisé en un ou plusieurs éléments avantageusement palmés (21, 22).

3. Simulateur selon la revendication 2, caractérisé par le fait que ledit socle (1) est réalisé par l'assemblage desdits éléments (21, 22), ces éléments étant identiques.

4. Simulateur selon la revendication 3, caractérisé par le fait que lesdits éléments (22) identiques sont rassemblés au moyen d'une bague de rappel (8) de centrage, coopérant avec chacun desdits éléments (22).

5. Simulateur selon l'une des revendications 1 à 6, caractérisé par le fait que lesdits moyens de freinage sont constitués par un organe (60) de friction, coopérant avec ledit support, et apte à frotter contre une partie (32) de ladite structure (1) d'appui.

6. Simulateur selon la revendication 1, caractérisé par le fait qu'il comprend des butées pour limiter le débattement dudit berceau (3) par rapport au bras pivotant (2).

7. Simulateur selon la revendication 8, caractérisé par le fait que ledit berceau (3) comporte une partie centrale (10) sensiblement en forme de U à ailes (35, 36) s'écartant l'une de l'autre, formant un profilé, ce profilé étant positionné de façon que lesdites ailes soient tournées vers ledit bras pivotant (2), cesdites ailes formant lesdites butées.

8. Simulateur selon l'une des revendications 1, 9 ou 10, caractérisé par le fait que ledit berceau (3) comporte au moins des moyens de préhension aptes à recevoir une planche à voile.

9. Simulateur selon la revendication 11, caractérisé par le fait que lesdits moyens de préhension sont constitués par deux bras (37, 38) montés respectivement sensiblement aux deux extrémités de ladite partie centrale (10).

10. Simulateur selon la revendication 12, caractérisé par le fait que lesdits moyens de préhension comportent, en outre, des ventouses (4) disposées respectivement aux extrémités desdits bras (37, 38).

11. Simulateur selon l'une des revendications 1 ou 9 à 16, caractérisé par le fait qu'il comporte des moyens de positionnement (14) solidaires de ladite partie centrale (10) dudit berceau (3), cesdits moyens étant aptes à coopérer avec le puits de dérive desdites planches à voile.

12. Simulateur selon la revendication 1, caractérisé en ce qu'il est complété par une voilure (70) réductible par enroulement autour d'un mât (71) sur lequel est appliqué un fourreau-clip (18) solidaire du mât.

## Claims

1. Sailboard simulator comprising an infrastructure resting on the ground (1), a sailboard support, means for allowing the said support to pivot with respect to the said structure, means of braking the rotation of the said support, characterized by the fact that the said support includes an arm (2) mounted so as to pivot about a spindle (30) on the said structure (1), a cradle (3), and deformable elastic means placed between the said pivoting arm and the said cradle, the said elastic means (6) being attached to the said pivoting arm (2) and cradle (3).

2. Simulator as per claim 1, characterized by the fact that the said infrastructure consists of a base (1) made of one or more judiciously webbed elements (21, 22).

3. Simulator as per claim 2, characterized by the fact that the said base (1) is made by the assembly of the said elements (21, 22), which are identical.

4. Simulator as per claim 3, characterized by the fact that the said identical elements (22) are joined by means of a locating return ring (8) cooperating with each of the said elements (22).

5. Simulator as per any of claims 1 to 4, characterized by the fact that the said means of braking consist of a friction element (60) cooperating with the said support and such as to rub against a part (32) of the said supporting structure (1).

6. Simulator as per claim 1, characterized by the fact that it includes stops to limit the travel of the said cradle (3) with respect to the pivoting arm (2).

7. Simulator as per claim 6, characterized by the fact that the said cradle (3) includes a central part (10) substantially in the shape of a U with flanges (35, 36) in opposite directions, forming a shape, this shape being placed in such a way that the said flanges are turned towards the said pivoting arm (2) and constitute the said stops.

8. Simulator as per, claims 1, 7, or 8, characterized by the fact that the said cradle (3) includes at least means of gripping suitable for holding a sailboard.

9. Simulator as per claim 8, characterized by the fact that the said means of gripping consist of two arms (37, 38) installed substantially at the two ends of the said central part (10).

10. Simulator as per claim 9, characterized by the fact that the said means of gripping further include suction cups (4) placed at the ends of the said arms (37, 38).

11. Simulator as per any of claims 1 and 7 to 10, characterized by the fact that it includes means of positioning (14) coupled to the said central part (10) of the said cradle (3), the said means being such as to co-operate with the centreboard truck of the said sailboards.

12. Simulator as per claim 1, characterized by the fact that it is completed by a sail (70) that can be reefed by rolling around a mast (71) on which is applied a sleeve-clip (18) coupled to the mast.

## Patentansprüche

1. Ein Windsurfsimulator bestehend aus einer bodenhaftenden Auflage-Struktur (1), einer Surfbrettstütze, geeigneten Vorrichtungen, um die besagte Stütze auf der besagten Struktur sich wiegen zu lassen ; Vorrichtungen, um die Rotation der besagten Stütze, gekennzeichnet durch die Tatsache, daß besagte Stütze einen Arm (2) besitzt, der sich um eine Achse (30) auf besagter Struktur (1), einer Wiege (3) und andere Vorrichtungen bewegt. Zwischen den besagten Armen und der besagten Wiege bewegen sich verformbare Gummiteile (6), die jeweils an die beiden besagten sich wiegenden Arme (2) und Wiege (3) befestigt sind.

2. Ein Simulator entsprechend des Anspruchs unter 1, gekennzeichnet dadurch, daß die besagte Struktur aus einem Sockel (1) besteht und zwar aus einem oder mehreren Elementen, die zweckdienlich handflächenförmig ausgestaltet sind (21, 22).

3. Ein Simulator entsprechend Anspruch zu 2, gekennzeichnet dadurch, daß der besagte Sockel (1) aus dem Zusammenbau der besagten Elemente (21, 22), wobei diese Elemente untereinander identisch sind, hervorgeht.

4. Ein Simulator gemäß Anspruch 3, gekennzeichnet dadurch, daß die besagten identischen Elemente (22) mit Hilfe eines Schrumpfrings (8), der mit jedem der besagten Elemente zusammenwirkt, verbunden werden.

5. Ein Simulator gemäß einem der Ansprüche 1 bis 6, gekennzeichnet dadurch, daß die besagten Bremsvorrichtungen aus einem Friktionsteil (60) bestehen, mit dem besagter Stützteil zusammenwirkt und in der Lage ist, sich gegen ein Teil (32) der besagten Auflagestruktur (1) zu reiben.

6. Ein Simulator gemäß Anspruch zu 1, gekennzeichnet dadurch, daß er Anschläge besitzt, die das Wiegen der besagten Wiege (3) im Verhältnis zum Dreharm (2) begrenzen.

7. Ein Simulator gemäß Anspruch zu 3, gekennzeichnet dadurch, daß die besagte Wiege (3) einen zentralen Teil (10) aufweist, sehr stark einem U mit Flügeln (35, 36) ähnlich, die (die Flügel) sich gegenseitig aufspreizen und ein Profil bilden, wobei dieses Profil sich so positioniert, daß die besagten Flügel zum Dreharm (2) hin gedreht sind, wobei die besagten Flügel die besagten Anschläge bilden.

8. Ein Simulator gemäß einem der Ansprüche zu 1, 9 und 10, gekennzeichnet durch die Tatsache, daß die besagte Wiege (3) mindestens eine Aufnahmevorrichtung, die ein Surfbrett aufnehmen kann, besitzt.

9. Ein Simulator gemäß Anspruch zu 11, gekennzeichnet durch die Tatsache, daß diese Aufnahmevorrichtungen aus zwei Armen (37, 38) bestehen, die jeweils mit den beiden Extremitäten des besagten Zentralteils (10) verbunden sind.

10. Ein Simulator gemäß Anspruch zu 12, gekennzeichnet dadurch, daß die besagten Aufnahmevorrichtungen außerdem Saugnäpfe (4) besitzen, die jeweils an den Extremitäten der besagten Arme (37, 38) angebracht sind.

11. Ein Simulator gemäß einem der Ansprüche zu 1 oder 9 bis 16, gekennzeichnet dadurch, daß er fest mit besagtem Zentralteil (10), der besagten Wiege verbundene Positionierelemente (14) besitzt, wobei diese Elemente mit den Driftrillen der besagten Surfbretter zusammenwirken.

12. Ein Simulator gemäß Anspruch zu 1, gekennzeichnet dadurch, daß er mit einer Segeltakelage (70) vervollständigt wird, einziehbar durch Einrollen um einen Mast (71), auf welchen sich eine Segeleinrollhülle (18), die wiederum mit dem Mast verbunden ist, befindet.

FIG.1

FIG.2

FIG.3

FIG.4

COUPE AA

FIG.6

FIG.5
COUPE BB

FIG.7

FIG.8

COUPE PARTIELLE CC

0 052 051

FIG.9

FIG.10

FIG.11

FIG.12

FIG.13

FIG-14

FIG.15

2